(19) **Europäisches Patentamt**
**European Patent Office**
**Office européen des brevets**

(11) **EP 1 756 497 B1**

(12) **EUROPEAN PATENT SPECIFICATION**

(45) Date of publication and mention
of the grant of the patent:
**10.01.2018 Bulletin 2018/02**

(51) Int Cl.:
***F25J 3/04*** *(2006.01)*

(21) Application number: **05750225.4**

(22) Date of filing: **30.05.2005**

(86) International application number:
**PCT/IB2005/001509**

(87) International publication number:
**WO 2005/119147 (15.12.2005 Gazette 2005/50)**

(54) **DISTILLATION COLUMN**

DESTILLATIONSKOLONNE

COLONNE DE DISTILLATION

(84) Designated Contracting States:
**AT BE BG CH CY CZ DE DK EE ES FI FR GB GR
HU IE IS IT LI LT LU MC NL PL PT RO SE SI SK TR**

(30) Priority: **04.06.2004 FR 0451108**

(43) Date of publication of application:
**28.02.2007 Bulletin 2007/09**

(73) Proprietor: **L'AIR LIQUIDE, Société Anonyme pour
l'Etude
et l'Exploitation des Procédés Georges Claude
75007 Paris (FR)**

(72) Inventors:
• **WERLEN, Etienne
F-94100 Maisons-Alfort (FR)**

• **LECLERCQ, François
F-28230 Epernon (FR)**
• **LEBAIN, Gilles
F-94320 THIAIS (FR)**

(74) Representative: **Mercey, Fiona Susan
L'Air Liquide SA,
DSPI - Service Brevets & Marques,
75 Quai d'Orsay
75321 Paris Cedex 07 (FR)**

(56) References cited:
**FR-A- 2 223 071      US-A- 3 466 151
US-A- 5 045 403      US-A- 5 882 772**

**Description**

The present invention relates to a distillation column comprising at least one cross-corrugated packing module comprising a plurality of strips with their channel orientations inverted from one strip to the next, the strip being made of a sheet material and being of the type comprising corrugations that form alternately first main peaks directed along a first direction and second main peaks directed along the opposite direction, the corrugations defining channels, each channel lying between two first or second adjacent main peaks forming edge peaks of the channel, and each channel having two channel legs that are joined together by a top main peak, the channels having a general orientation that is inclined to a general flow direction of the said liquid, the strip furthermore comprising at least one inverted portion which lies entirely within the cross section of one of the channels and which joins together the two channel legs, the inverted portion comprising a first intermediate peak oriented in the opposite direction to the top main peak of the channel.

The term "packing" is understood to mean a device intended for mixing a phase and/or for bringing several phases flowing co-currently or countercurrently into contact with one another. A heat and/or mass exchange and/or a chemical reaction may in particular take place in the packing. One particular application of the invention lies in the columns separating gas mixtures, especially air distillation columns.

Mentioned in the prior art are air distillation installations comprising cross-corrugated packing modules, which are also called "packs". The modules comprise corrugated metal sheets placed vertically, the corrugations of which sheets are oblique with respect to a general fluid flow direction in the installation and are inclined alternately, generally crossed at 90°, from one sheet to another.

The packing modules are slipped into the distillation column so that the sheets of one module are angularly offset with respect to the sheets of an adjacent module about the axis of the column, generally by 90° from one module to another.

To improve the exchange between a liquid and a gas, which are flowing through the packing module, it has been proposed in the prior art to have openings that are made in the corrugated metal sheets. These openings lead to a change in the flow of the gas from one side of the metal sheet of the packing to the other and improve exchange with the liquid.

A distillation column according to the preamble of claim 1 is known from EP-A-1 029 588, the corrugations of which form peaks and valleys joined together by corrugation legs defiling channels. This strip includes inverted portions, also called "serrations", which lie within each channel, each inverted portion forming a single intermediate peak. The inverted portion defines an angle of 90° with each corrugation leg to which it is joined.

When this strip is manufactured by bending a thin flat metal sheet, the material forms tears or pleats. The finished packing strip therefore deviates from its desired geometrical shape, thereby reducing the mass or heat exchange performance of the finished strip.

Document US-A-4 670 196 also describes a corrugated packing strip provided with inverted portions, which has the same drawbacks.

The object of the present invention is to alleviate the above drawbacks and to propose a packing strip that is easy to manufacture from a thin flat metal sheet and results in substantial heat and/or mass exchange.

For this purpose, the subject of the invention is a column according to Claim 1.

According to particular embodiments, the strip of the column according to the invention includes one or more of the following features:

- the inverted portion comprises a third intermediate peak oriented in the direction of the top main peak, the second and third intermediate peaks lying on either side of the first intermediate peak;
- seen in cross section taken perpendicular to the orientation of the channel, the inverted portion is joined at a point to each of the channel legs and the developed length of the channel and the developed length of the inverted portion, which are measured between the two points, are approximately identical;
- the cross section of the inverted portion comprises a first circular arc, which forms the first intermediate peak, and second and third circular arcs, which form the second and third intermediate peaks, and lying between the first circular arc and each of the second and third circular arcs is an intermediate straight section of the inverted portion, which straight section is joined tangentially to the associated circular arcs;
- the cross section of the channel comprises a main circular arc that forms the top main peak and two main straight sections which join tangentially to the main circular arc;
- the radius of curvature of the main circular arc is equal to the sum of the radii of curvature of the first, second and third circular arcs and the angle between each of the intermediate straight sections and the associated main straight section is equal to the angle between the main straight sections;
- the channel has a height which is measured between the top main peak of the channel and a plane lying between the two adjacent main peaks of the channel and the distance between the top main peak and the first intermediate peak is approximately equal to 2/3 times the height; and

- the strip is made of a bent metal sheet.

A better understanding of the invention will be gained by reading the following description, given solely by way of example and with reference to the appended drawings, in which:

- Figure 1 is a schematic view, in longitudinal section, of a mass and/or heat exchange column according to the invention, comprising cross-corrugated packing modules;
- Figure 2 is a plan view of part of a packing strip of a column according to the invention;
- Figure 3 is a perspective view of part of the strip of Figure 2; and
- Figure 4 is a sectional view of the strip along the line IV-IV of Figure 2, on a larger scale.

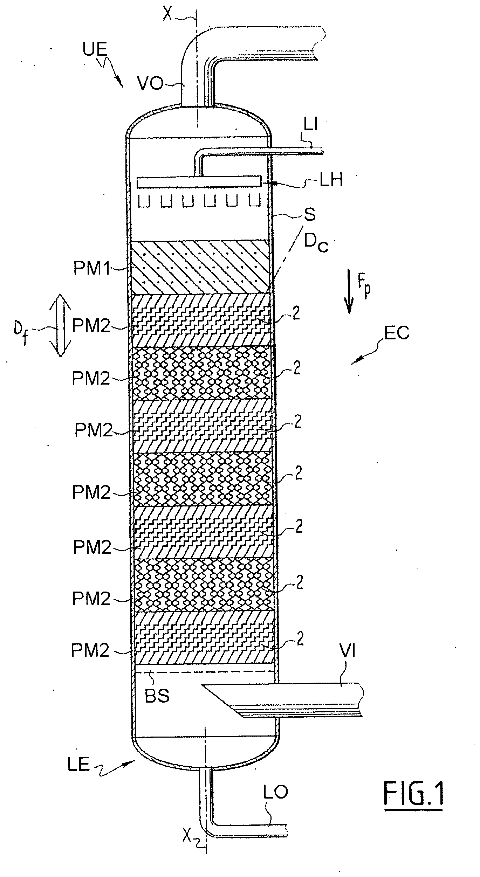

Figure 1 shows a mass and/or heat exchange column EC according to the invention, having a vertical general axis X-X. The column EC is for example a cryogenic distillation column, especially an air distillation column.

The column EC comprises, at its upper end UE, a liquid inlet LI emerging in a liquid header LH which distributes the liquid over the cross section of the column EC, and a vapour outlet VO. At its lower end LE, it comprises a vapour inlet VI and a liquid outlet LO. The column EC furthermore includes a cylindrical shell S.

The column EC defines a general fluid flow direction $D_f$, which runs vertically.

A packing module PM1, which favours the spreading of the liquid transversely to the X-X axis, is placed in the shell S directly below the header LH. Such a module PM1 is known per se and is for example a packing module comprising a cross-corrugated packing with perforations or striations.

A plurality of packing modules PM2 according to the invention is placed in the shell S beneath the module PM1. A bottom support BS holds the packing modules PM1, PM2 in place.

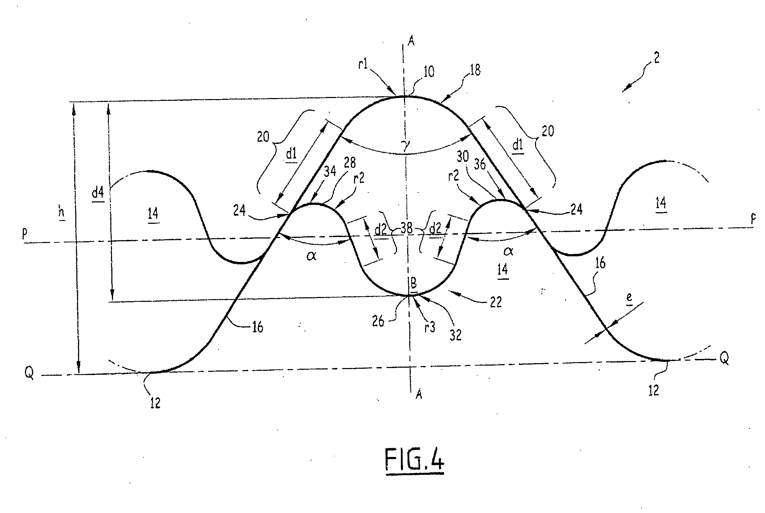

Each packing module PM2 comprises a multitude of corrugated packing strips 2. The strips 2 have a midplane P (see Figure 4) lying parallel to the general direction $D_f$. The strips 2 of a module PM2 are placed against one another and in such a way that the.planes P lie parallel to one another. The planes P of the packing strips of two adjacent modules PM2 are angularly offset about the X-X axis, preferably by approximately 90°.

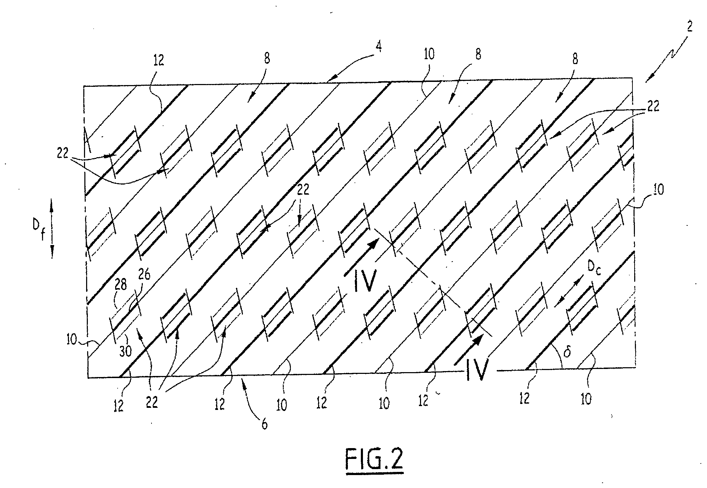

Figure 2 shows.part of a packing strip 2.

The strip 2 has two parallel edges, an upper edge 4 and a lower edge 6, which lie perpendicular to the direction $D_f$.

The strip 2 also has corrugations 8 which form alternately first main peaks 10, directed in one direction (see Figure 4) relative to the general midplane P of the strip 2, and second main peaks 12, directed in the opposite direction relative to the plane P. In this case, the second peaks 12 form valleys.

The corrugations 8 form identical but alternately inverted channels 14, each channel lying between two first 10 or two second 12 main peaks. The channels 14 are open alternately in one of the two aforementioned directions and then in the other. The intermediate main peak 12 or 10 forms the top main peak of the channel 14 in question, whereas the two adjacent peaks 10 or 12 form the channel edge peaks. Two adjacent main peaks 10, 12 are joined together by a channel leg .16 of straight section. The channels 14, and consequently the peaks 10, 12, lie along a channel direction $D_c$ that is inclined at an angle δ to the edges 4,6 (see figure 2). The directions $D_c$ of two adjacent strips 2 of a module PM2 are inverted one with respect to the other.

In cross section, taken perpendicular to the direction $D_c$, as shown in Figure 4, each channel 14 has a first circular arc 18 of radius of curvature r1, which forms the top main peak 10. A main straight section 20 of the channel leg 16 is joined tangentially to this circular arc 18 on either side of the latter. This straight section 20 has a length d1 measured between the join 24 (see below) and the circular arc 18. The two straight sections 20 make an angle γ between them.

The strip 2 furthermore includes, in each channel 14, a multitude of identical inverted portions 22.

Figure 4 shows one of these inverted portions 22. The inverted portion 22 lies entirely within the cross section of the channel 14, that is to say that the portion of the strip 2, which lies inside the thickness e of the corrugation legs 16, does not form part of the inverted portion 22. The inverted portion 22 joins the two legs 16 of the channel 14 together and is joined to them at two joins 24. It forms a first intermediate peak 26 directed in the opposite direction to the top peak 10 of the channel, and two intermediate peaks, a second intermediate peak 28 and a third intermediate peak 30, which are oriented in the direction of the top main peak 10 and lie on either side of the intermediate peak 26.

The cross section of the inverted portion 22 comprises three circular arcs 32, 34, 36. The circular arcs 34, 36 have the same radius of curvature r2 and form the second 28 and third 30 intermediate peaks, whereas the circular arc 32 has a radius of curvature r3 (> r2) and forms the first intermediate peak 26. Extending between the circular arc 32 and each of the circular arcs 34, 36 is a straight section 38 of the inverted portion 22, which straight portion is joined tangentially to each of the circular arcs 32, 34, 36. The straight sections 38 have the same length d2.

Advantageously, the circular arcs 34, 36 are joined tangentially to the channel legs 16. As a consequence, there is little stressing of the metal sheet during deformation.

Each of the two straight sections 38 makes an angle α with the adjacent corrugation leg 16.

The developed length of the inverted portion 22 is identical to the developed length of the two main straight sections 20 and of the circular arc 18. Thus, the material is not stretched, or only slightly so, during bending.

Moreover, the channel 14 has a height $\underline{h}$ which is measured between the top main peak 10 of the channel and a plane Q defined by the two adjacent main peaks 12. The distance $\underline{d4}$ between the top main peak 10 and the first intermediate peak 26 is approximately 2/3 of the height $\underline{h}$. In other words: $d4 = \dfrac{2}{3}h$ .

Thus, the first intermediate peak 26 lies approximately at the location of the barycentre B of the cross section of the channel. It is at this point that there is the highest concentration of mass or the highest temperature of a gas flowing in the channel 14. Consequently, the strip 2 results in substantial heat and/or mass exchange.

In addition, the channel 14 and the inverted portion 22 are symmetrical with respect to a plane of symmetry A, perpendicular to the planes P and Q, the plane of symmetry being defined by the top main peak 10 and the first intermediate peak 26.

In order for the criterion of identical developed lengths to be respected, the following geometrical condition has to be satisfied.

In the case (not shown) in which $\alpha = \gamma$:

$$r1 = 2r2 + r3 .$$

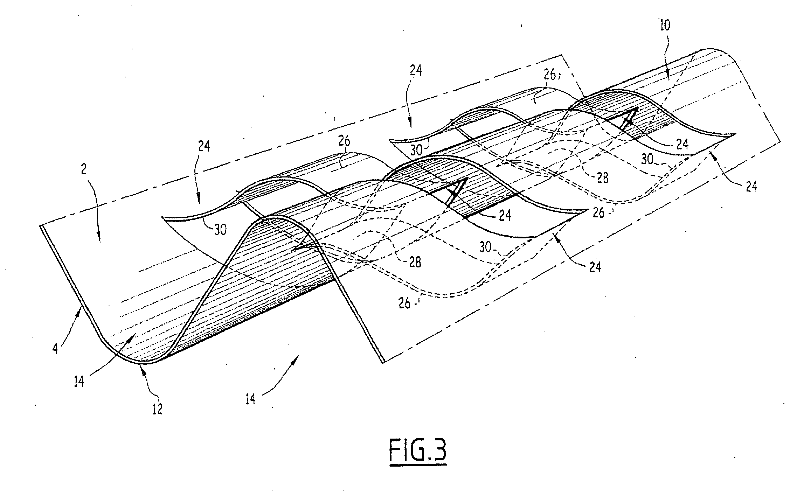

In the case shown in Figure 3, the angles $\alpha$ and $\gamma$ are not the same. In this case, the following conditions have to be satisfied:

$$d1 = \frac{K' - K \sin\left(\alpha - \dfrac{\gamma}{2}\right)}{\sin\left(\dfrac{\gamma}{2}\right) - \sin\left(\alpha - \dfrac{\gamma}{2}\right)} \quad \text{and} \quad d2 = d1 - K,$$

where $\quad K = r2(\pi - \alpha) + r3\left(\dfrac{\pi}{2} - \alpha + \dfrac{\gamma}{2}\right) - r1\left(\dfrac{\pi}{2} - \dfrac{\gamma}{2}\right) \quad$ and

$$K' = r2\left[\cos\left(\dfrac{\gamma}{2}\right) + \cos\left(\alpha - \dfrac{\gamma}{2}\right)\right] + r3\cos\left(\alpha - \dfrac{\gamma}{2}\right) - r1\cos\left(\dfrac{\gamma}{2}\right) .$$

The radii of curvature r1, r2, r3 of the corrugation 8 and of the inverted portion 22 are preferably at least 1 mm and in particular at least 2 mm, thereby making it easier to form the inverted portion 22 without material rupture.

The strip 2 according to the invention is manufactured according to a process comprising the following steps:

(a) a flat metal sheet is firstly bent, thus forming a corrugated sheet that includes the channels 14;

(b) two slits are then cut in the sheet at the location of each inverted portion 22;

(c) finally, the portions lying between two slits are bent in the opposite manner to the corrugation, thus forming the inverted portions 22.

Owing to the presence of at least one second intermediate peak, the strip 2 is only slightly deformed at the joins 24. There is therefore little likelihood of the strip 2 tearing at these joins. Because the developed length of the corrugation 8 is the same as that of the inverted portion 22 between the joins 24, the finished strip 2 is smooth and has a thickness $\underline{e}$ which is approximately the same over its entire surface. In addition, a risk of the strip 2 fracturing during bending is low.

As a variant, the slits are cut before the flat sheet is bent, so that step (b) is carried out before step (a).

Also as a variant, steps (b) and (c) are carried out at the same time. Thus, it is unnecessary to synchronize the cutting and bending tools for the inverted portion.

According to a variant (not shown), the intermediate peak 26 is placed close to the barycentre B of the cross section of the channel 14, for example at a distance from this point B of less than 0.20 times the height $\underline{h}$ of the channel 14. Thus, the intermediate peak 26 remains within a high concentration or high temperature region.

Depending on the embodiments, the packing strip 2 according to the invention also includes the following features:

- in cross section taken perpendicular to the orientation of the channel 14, the inverted portion 22 is continuous over

EP 1 756 497 B1

its entire developed length;

- the inverted portion 22 joins the channel legs 16 without a sharp edge;
- the second 34 and third 36 circular arcs are joined to the channel legs 16 tangentially;
- the channel 14 has a height $\underline{h}$ which is measured between the top main peak 10, 12 of the channel and a plane Q lying between the two edge main peaks 12, 10 of the channel, the area of the cross section of the channel 14 has a barycentre B, and the first intermediate peak 26 of the inverted portion 22 is located at a distance from the barycentre that is less than 0.20 times the height $\underline{h}$;
- the channel 14 and the inverted portion 22 are symmetrical with respect to a plan of symmetry A defined by the top main peak 10 and by the first intermediate peak 26;
- the thickness $\underline{e}$ of the strip 2 is approximately the same over its entire surface.

The invention also relates to a cryogenic distillation installation and in particular to an air distillation installation comprising at least one packing module as defined above.

**Claims**

1. Distillation column comprising at least one cross-corrugated packing module comprising a plurality of strips (2) with their channel orientations ($D_c$) inverted from one strip to the next, the strip being made of a sheet material and being' of the type comprising corrugations (8) that form alternately first main peaks (10; 12) directed along a first direction and second main peaks (12; 10) directed along the opposite direction, the corrugations (8) defining channels (14); each channel lying between two first (10; 12) or second (12; 10) adjacent main peaks forming edge peaks of the channel, and each channel having two channel legs (16) that are joined together by a top main peak (10; 12), the channels (14) having a general orientation ($D_c$) that is inclined to a general flow direction ($D_f$) of the said liquid when the column is in use, the strip (2) furthermore comprising at least one inverted portion (22) which lies entirely within the cross section of one of the channels (14) and which joins together the two channel legs (16), the inverted portion (22) comprising a first intermediate peak (26) oriented in the opposite direction to the top main peak (10; 12) of the channel, **characterized in that** the inverted portion (22) furthermore includes a second intermediate peak (28; 30) oriented in the direction of the top main peak (10; 12).

2. Column according to Claim 1, **characterized in that** the inverted portion (22) of the strip comprises a third intermediate peak (30, 28) oriented in the direction of the top main peak (10; 12), the second (28, 30) and third (30, 28) intermediate peaks lying on either side of the first intermediate peak (26).

3. Column according to Claim 1 or 2, **characterized in that**, seen in cross section taken perpendicular to the orientation of the channel (14), the inverted portion (22) of the strip is joined at a point (24) to each of the channel legs (16) and **in that** the developed length of the channel (14) and the developed length of the inverted portion (22), which are measured between the two points (24), are approximately identical.

4. Column according to Claim 2, **characterized in that** the cross section of the inverted portion (22) of the strip comprises a first circular arc (32), which forms the first intermediate peak (26), and second (34, 36) and third (36, 34) circular arcs, which form the second (28, 30) and third (30, 28) intermediate peaks, and **in that** lying between the first circular arc (32) and each of the second (34, 36) and third (36, 34) circular arcs is an intermediate straight section (38) of the inverted portion (22), which straight section (38) is joined tangentially to the associated circular arcs (32, 34, 36).

5. Column according to any one of Claims 1 to 4, **characterized in that** the cross section of the channel (14) of the strip comprises a main circular arc (18) that forms the top main peak (10; 12) and two main straight sections (20) which join tangentially to the main circular arc (18).

6. Column according to Claims 4 and 5 taken together, **characterized in that** the radius of curvature (r1) of the main circular arc (18) is equal to the sum of the radii of curvature (r2, r3) of the first (32), second (34, 36) and third (36, 34) circular arcs and **in that** the angle ($\alpha$) between each of the intermediate straight sections (38) and the associated main straight section (20) is equal to the angle ($\gamma$) between the main straight sections (20).

7. Column according to any one of the preceding claims, **characterized in that** the channel (14) has a height ($\underline{h}$) which is measured between the top main peak (10; 12) of the channel and a plane (P) lying between the two adjacent main peaks (12; 10) of the channel and **in that** the distance ($\underline{d4}$) between the top main peak (10; 12) and the first intermediate peak (26) is approximately equal to 2/3 times the height (h).

8. Column according to any one of Claims 1 to 7, **characterized in that** the strip is made of a folded metal sheet.

## Patentansprüche

1. Destillationskolonne, umfassend mindestens ein quergeriffeltes Verpackungsmodul, das eine Mehrzahl von Streifen (2) umfasst, deren Kanalausrichtungen ($D_c$) von einem Streifen zum nächsten umgekehrt werden, wobei der Streifen aus einem Blechmaterial hergestellt ist und des Typs ist, der Riffelungen (8) umfasst, die abwechselnd erste Hauptspitzen (10; 12) bilden, die entlang einer ersten Richtung ausgerichtet sind, und zweite Hauptspitzen (12; 10), die entlang der entgegengesetzten Richtung ausgerichtet sind, wobei die Riffelungen (8) Kanäle (14) definieren, wobei jeder Kanal zwischen zwei ersten (10; 12) oder zweiten (12; 10) benachbarten Hauptspitzen liegt, die Randspitzen des Kanals bilden, und wobei jeder Kanal zwei Kanalschenkel (16) aufweist, die durch eine obere Hauptspitze (10; 12) zusammengefügt werden, wobei die Kanäle (14) eine allgemeine Ausrichtung ($D_c$) aufweisen, die zu einer allgemeinen Flussrichtung ($D_f$) der Flüssigkeit geneigt ist, wenn die Kolonne verwendet wird, wobei der Streifen (2) weiterhin mindestens einen umgekehrten Abschnitt (22) umfasst, der vollständig innerhalb des Querschnitts eines der Kanäle (14) liegt, und der die zwei Kanalschenkel (16) zusammenfügt, wobei der umgekehrte Abschnitt (22) eine erste Zwischenspitze (26) umfasst, die in die entgegengesetzte Richtung der oberen Hauptspitze (10; 12) des Kanals ausgerichtet ist, **dadurch gekennzeichnet, dass** der umgekehrte Abschnitt (22) weiterhin eine zweite Zwischenspitze (28; 30) aufweist, die in Richtung der oberen Hauptspitze (10; 12) ausgerichtet ist.

2. Kolonne nach Anspruch 1, **dadurch gekennzeichnet, dass** der umgekehrte Abschnitt (22) des Streifens eine dritte Zwischenspitze (30, 28) umfasst, die in Richtung der oberen Hauptspitze (10; 12) ausgerichtet ist, wobei die zweite (28; 30) und dritte (30; 28) Zwischenspitze auf jeder Seite der ersten Zwischenspitze (26) liegen.

3. Kolonne nach Anspruch 1 oder 2, **dadurch gekennzeichnet, dass**, wenn im Querschnitt entlang der Senkrechten zur Ausrichtung des Kanals (14) betrachtet, der umgekehrte Abschnitt (22) des Streifens an einem Punkt (24) mit jedem der Kanalschenkel (16) zusammengefügt ist und dadurch, dass die Länge des Kanals (14) und die entwickelte Länge des umgekehrten Abschnitts (22), die zwischen den zwei Punkten (24) gemessen werden, ungefähr identisch sind.

4. Kolonne nach Anspruch 2, **dadurch gekennzeichnet, dass** der Querschnitt des umgekehrten Abschnitts (22) des Streifens einen ersten Kreisbogen (32), der die erste Zwischenspitze (26) bildet, und zweite (34, 36) und dritte (36, 34) Kreisbögen umfasst, welche die zweite (28, 30) und dritte (30, 28) Zwischenspitze bilden, und dadurch, dass das Liegen zwischen dem ersten Kreisbogen (32) und jedem des zweiten (34, 36) und dritten (36, 34) Kreisbogens ein gerader Zwischenteilabschnitt (38) des umgekehrten Abschnitts (22) ist, wobei der gerade Teilabschnitt (38) tangential mit den zugehörigen Kreisbögen (32, 34, 36) zusammengefügt wird.

5. Kolonne nach einem der Ansprüche 1 bis 4, **dadurch gekennzeichnet, dass** der Querschnitt des Kanals (14) des Streifens einen Hauptkreisbogen (18), der die obere Hauptspitze (10; 12) bildet, und zwei gerade Abschnitte (20), die sich tangential dem Hauptkreisbogen (18) anfügen, bildet.

6. Kolonne nach Anspruch 4 und 5 zusammengenommen, **dadurch gekennzeichnet, dass** der Krümmungsradius (r1) des Hauptkreisbogens (18) gleich der Summe der Krümmungsradii (r2, r3) des ersten (32), zweiten (34, 36) und dritten (36, 34) Kreisbogens ist, und dadurch, dass der Winkel ($\alpha$) zwischen jedem der geraden Zwischenteilabschnitte (38) und dem zugehörigen geraden Hauptteilabschnitt (20) gleich dem Winkel ($\gamma$) zwischen den geraden Hauptteilabschnitten (20) ist.

7. Kolonne nach einem der vorhergehenden Ansprüche, **dadurch gekennzeichnet, dass** der Kanal (14) eine Höhe (h) aufweist, die zwischen der oberen Hauptspitze (10; 12) des Kanals und einer Ebene (P), die zwischen den zwei benachbarten Hauptspitzen (12; 10) des Kanals liegt, gemessen wird, und dadurch, dass der Abstand (d4) zwischen der ersten Hauptspitze (10; 12) und der ersten Zwischenspitze (26) ungefähr gleich dem 2/3-fachen der Höhe (h) beträgt.

8. Kolonne nach einem der Ansprüche 1 bis 7, **dadurch gekennzeichnet, dass** der Streifen aus einem gefalteten Metallblech hergestellt ist.

**Revendications**

1. Colonne de distillation comprenant au moins un module d'emballage à ondulations croisées comprenant une pluralité de bandes (2) avec leurs orientations de canaux ($D_c$) inversées d'une bande à l'autre, la bande étant réalisée en un matériau de feuille et étant du type comprenant des ondulations (8) qui forment en alternance des premiers sommets principaux (10 ; 12) dirigés le long d'une première direction et des deuxièmes sommets principaux (12 ; 10) dirigés le long de la direction opposée, les ondulations (8) définissant des canaux (14), chaque canal se trouvant entre deux premiers (10; 12) ou deuxièmes (12; 10) sommets principaux adjacents formant des sommets de bord du canal, et chaque canal ayant deux branches de canal (16) qui sont reliées l'une à l'autre par un sommet principal supérieur (10 ; 12), les canaux (14) ayant une orientation générale ($D_c$) qui est inclinée par rapport à une direction de flux générale ($D_f$) dudit liquide lorsque la colonne est en service, la bande (2) comprenant en outre au moins une portion inversée (22) qui se trouve entièrement à l'intérieur de la section transversale d'un des canaux (14) et qui relie ensemble les deux branches de canal (16), la portion inversée (22) comprenant un premier sommet intermédiaire (26) orienté dans la direction opposée au sommet principal supérieur (10 ; 12) du canal, **caractérisée en ce que** la portion inversée (22) comprend en outre un deuxième sommet intermédiaire (28 ; 30) orienté dans la direction du sommet principal supérieur (10 ; 12).

2. Colonne selon la revendication 1, **caractérisée en ce que** la portion inversée (22) de la bande comprend un troisième sommet intermédiaire (30, 28) orienté dans la direction du sommet principal supérieur (10 ; 12), les deuxième (28, 30) et troisième (30, 28) sommets intermédiaires se trouvant de chaque côté du premier sommet intermédiaire (26).

3. Colonne selon la revendication 1 ou 2, **caractérisée en ce que**, vue en section transversale prise perpendiculairement à l'orientation du canal (14), la portion inversée (22) de la bande est reliée à un point (24) à chacune des branches de canal (16) et **en ce que** la longueur développée du canal (14) et la longueur développée de la portion inversée (22), qui sont mesurées entre les deux points (24), sont approximativement identiques.

4. Colonne selon la revendication 2, **caractérisée en ce que** la section transversale de la portion inversée (22) de la bande comprend un premier arc circulaire (32), qui forme le premier sommet intermédiaire (26), et des deuxième (34, 36) et troisième (36, 34) arcs circulaires, qui forment les deuxième (28, 30) et troisième (30, 28) sommets intermédiaires, et **en ce que** se trouve entre le premier arc circulaire (32) et chacun des deuxième (34, 36) et troisième (36, 34) arcs circulaires une section droite intermédiaire (38) de la portion inversée (22), laquelle section droite (38) est reliée tangentiellement aux arcs circulaires associés (32, 34, 36).

5. Colonne selon l'une quelconque des revendications 1 à 4, **caractérisée en ce que** la section transversale du canal (14) de la bande comprend un arc circulaire principal (18) qui forme le sommet principal supérieur (10 ; 12) et deux sections droites principales (20) qui se rejoignent tangentiellement en l'arc circulaire principal (18).

6. Colonne selon les revendications 4 et 5 prises ensemble, **caractérisée en ce que** le rayon de courbure (r1) de l'arc circulaire principal (18) est égal à la somme des rayons de courbure (r2, r3) des premier (32), deuxième (34, 36) et troisième (36, 34) arcs circulaires et **en ce que** l'angle ($\alpha$) entre chacune des sections droites intermédiaires (38) et la section droite principale associée (20) est égal à l'angle ($\gamma$) entre les sections droites principales (20).

7. Colonne selon l'une quelconque des revendications précédentes, **caractérisée en ce que** le canal (14) a une hauteur ($\underline{h}$) qui est mesurée entre le sommet principal supérieur (10 ; 12) du canal et un plan (P) se trouvant entre les deux sommets principaux adjacents (12 ; 10) du canal et **en ce que** la distance ($\underline{d4}$) entre le sommet principal supérieur (10; 12) et le premier sommet intermédiaire (26) est approximativement égale à 2/3 fois la hauteur ($\underline{h}$).

8. Colonne selon l'une quelconque des revendications 1 à 7, **caractérisée en ce que** la bande est réalisée en une feuille métallique pliée.

FIG.1

FIG.2

FIG.3

FIG.4

EP 1 756 497 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1029588 A
- US 4670196 A